# EUROPEAN PATENT APPLICATION

(11) **EP 1 720 117 A1**
(43) Date of publication of application: **08.11.2006**
(21) Application number: 04819969.9
(22) Date of filing: 08.12.2004
(51) Int. Cl.: G06K 19/00, G06K 17/00, G06F 15/00

(54) **USER AUTHENTIFICATION INFORMATION RECORDING MEDIUM, USER AUTHENTIFICATION SECURITY CARD, AND USER AUTHENTIFICATION SECURITY CARD**

(30) Priority: 08.12.2003 JP 408452
(71) Applicant: Kokusai Medicom Kabushikikaisha, Tokyo 160-0022 (JP)
(72) Inventor: HANEDA, Takuya, Tokyo 192-0047 (JP)
(74) Representative: Schneider, Günther Martin
(86) International application number: PCT/JP2004/018295
(87) International publication number: WO 2005/055131

(57) **Abstract**

[PROBLEM]

To provide a user authentication information recording medium providing a unique hologram tape.

[MEANS FOR SOLVING PROBLEMS]

A long flat image 310 that expresses a random number in a rectilinear state in a form of a bar code is created, and hologram original image 42 of the random number of the form of a bar code is created based on this. Hologram original image 42 is coiled around surface of drum 100 so as to create drum-shaped hologram master 10D in which the small convexes / concaves corresponding to interference fringes is formed on the surface of drum 100. Rotating drum-shaped hologram master 10D on surface of long material sheet 20S so that small convexes / concaves hologram original image 110 of surface of drum-shaped hologram master 10D is transferred on material sheet 20S repeatedly; material sheet 20S is cut out into hologram tape T providing small convexes/concaves hologram original image 110 transferred. The hologram tape T and user authentication information p are added and user authentication information p and personal information belonging to the user are both encrypted and memorized in a IC.

## Description

### [Field of the Invention]

The present invention relates to the user authentication information recording medium, user authentication security card, and user authentication security card recording / reproducing method; especially, it relates to the user authentication information recording medium, the user authentication security card and the user authentication security card recording / reproducing method, wherein: having IC which memorizes user authentication information and user personal information electronically and having authentication information on a surface, having the hologram tape to the surface, and makes this as a unique code information on an information recording medium.

### [Background of the Invention]

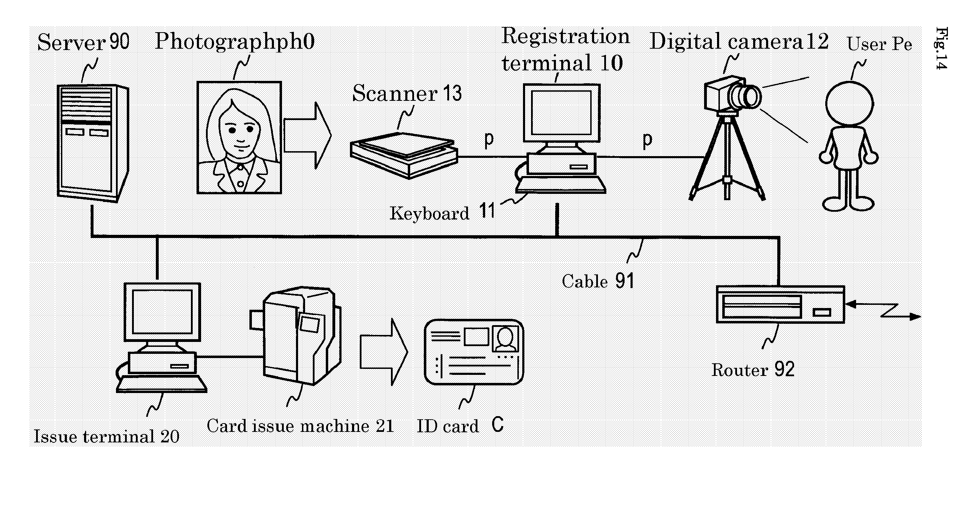

The conventional arts are explained based on FIG. 14. FIG. 14 shows a various kind of equipment currently installed in a public office.

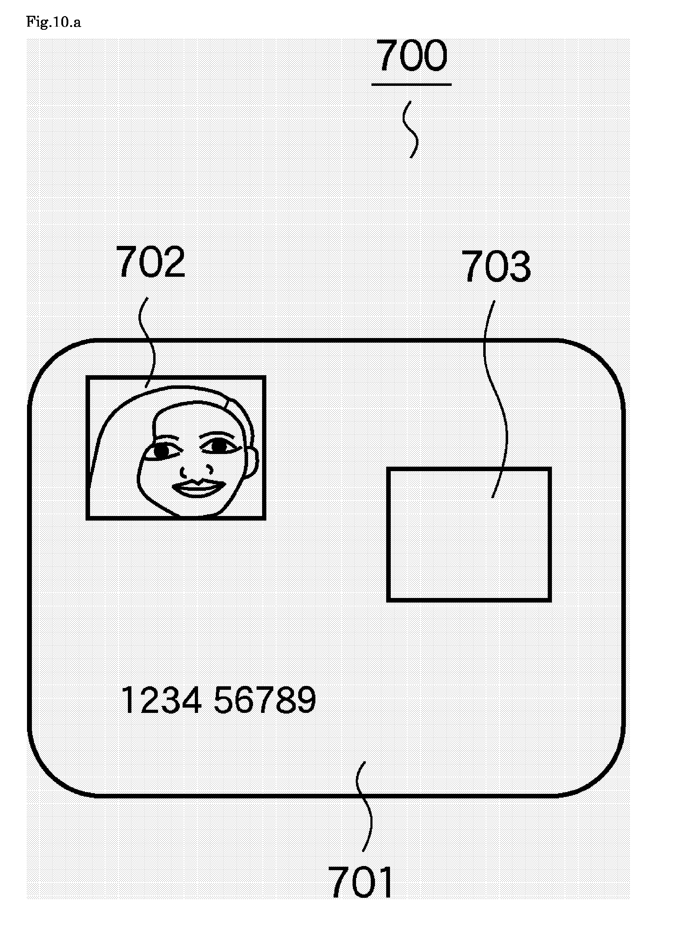

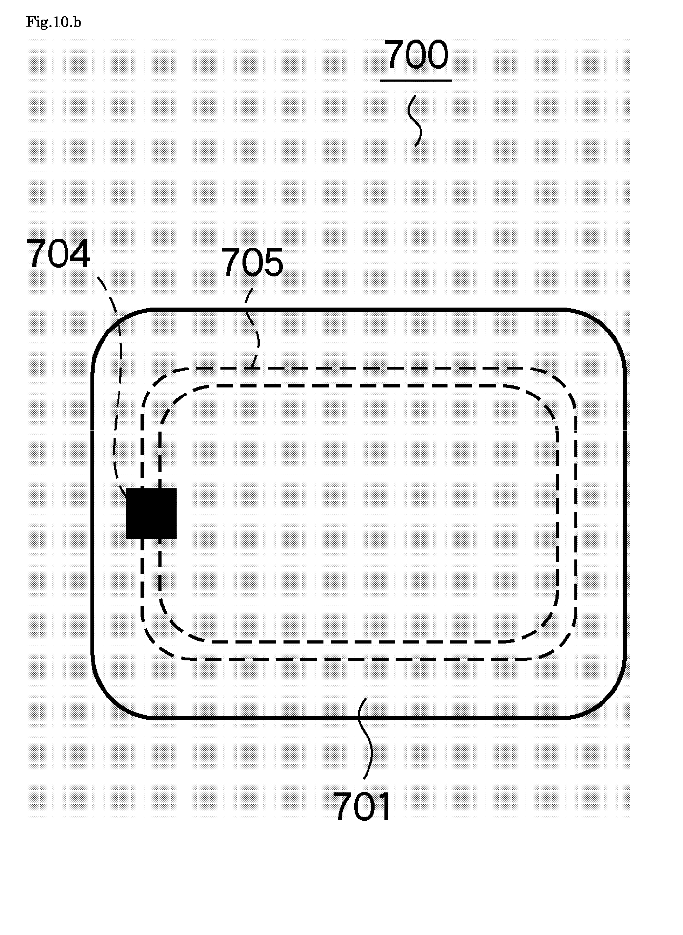

In FIG. 14, 10 shows a registration terminal which is comprised of a computer. 11 is a keyboard which connect to registration terminal 10. 12 shows a digital camera and 13 shows a scanner. Pe shows a user, and p shows an authentication information (in this example, photograph of user face image). 20 shows an issue terminal which is comprised of the computer. 21 shows a card issue machine. C is a user authentication information recording medium, such as an ID card, a passport, and the like, which is issued by issue terminal 20 and card issue machine 21. As follows, it is explained user authentication information recording medium is as the ID card. 90 shows a server, and 91 shows a cable, and 92 shows a router. Registration terminal 10 is connected to issue terminal 20 and is connected to server 90 via a LAN equipment containing cable 91 and router 92.

Here, at first, user face photographic image p which is the user authentication information, and personal information belonging to the user is registered into registration terminal 10. Required user face photographic image p is read into registration terminal 10 through scanner 13 by using photograph ph0, or it is directly taken in registration terminal 10 with digital camera 12. The personal information, such as an ID number, an address, a name, sex, a birth date, a legal domicile and an occupation, are registered into server 90 with manual operation through keyboard 11 linked to the registration terminal 10 apart from user face photographic image p. According to the above, user face photographic image p which is the user authentication information and the personal information which belongs to the user is made to a database as memory data. All memory data is encrypted by encryption coding algorithm and is then memorized.

Here, when ID card C is issued, issue terminal 20 reads object information for ID card C to be issued from the database in server 90 and inputs through LAN equipment. The object information of ID card C inputted into issue terminal 20 is sent into card issue machine 21 and is written in a magnetic medium or IC which is the memory medium built in ID card C. The writing is performed by encryption encoding algorithm. While all the object information of ID card C is written in ID card C, photograph of user face image which is the user authentication information, and only basic data of the memory data belonging to the user are printed in both sides of the card. As the basic data, for example, the address, the name, the sex, the birth date, the domicile and the occupation in the memory data are chosen. In this case, ID number is recorded on a magnetic stripe formed in a position specified on the surface of ID card C. In addition, since the memory data of ID card C is encrypted and memorized, even if ID card C is gathered by the third person, there is no risk that contents of a memory is read.

By the way, the user authentication information recording medium, such as ID card C or a passport, is continuously exposed to risk of being altered or being forged the contents of record of the magnetic stripe which have an important meaning to attest the user. An alteration or forgery for the contents of record of the magnetic stripe leads also to the alteration of the memory data belonging to the user. Thus, mitigating the possibility of altered and forged is performed by adopting an composition forming an optical element as like a hologram or a diffraction grating on the surface of ID card C instead of the magnetic stripe and providing a reading equipment of the hologram or the diffraction grating and recognizing them (see, patent references 1 to 6).

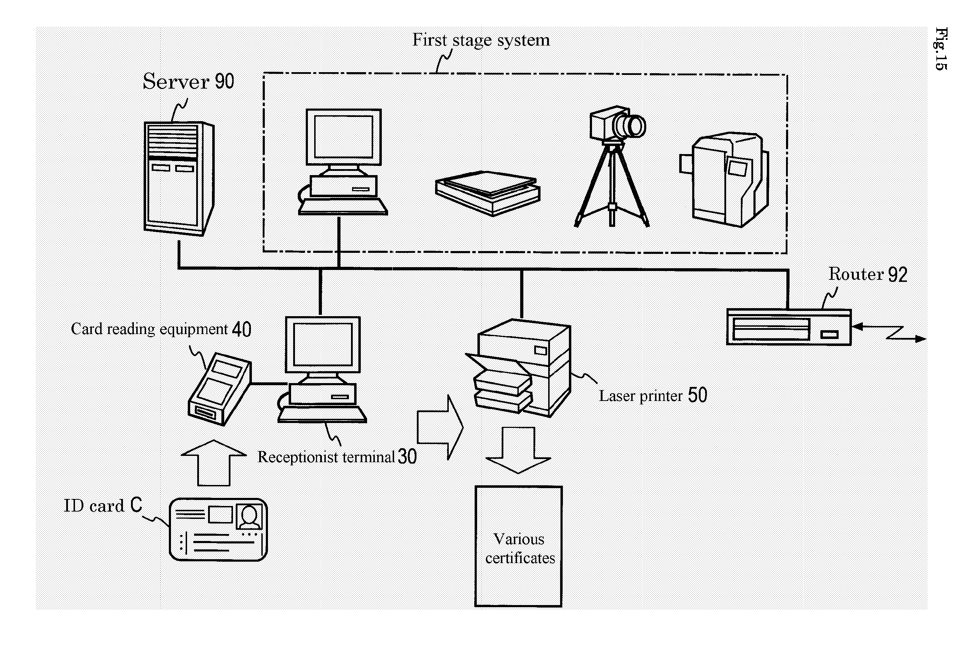

As referred to FIG. 15, subsequently, in order to perform check the user and issue of various kinds of certificates on-line, receptionist terminal 30 which comprised of a computer is prepared in the public office which carry it out, and it is connected to LAN. Then, card reading equipment 40 is connected to receptionist terminal 30. Furthermore, laser printer 50 is connected to LAN.

Here, published ID card C is brought, and applying it to card reading equipment 40 carries out an operation of reading ID number. Then, it is carried out an operation of reading the information on user face photographic image p and the memory data belonging to the user, which are memorized inside, by applying ID card C to the receptionist terminal 30. The information on the user face photographic image p and the memory data belonging to the user is displayed on the receptionist terminal 30 based on the read ID number, the information on the read user face photographic image p and the memory data belonging to the user. When the photograph of the user face image p displayed here agrees with the image printed on the surface of ID card C, or features of user, a person who brought ID card C is authenticated to the user.

Moreover, there are some ID (identification) cards conventionally used as identification cards, which records the information magnetically or records the information to IC (integrated circuit). Moreover, there is what makes ID card C memorize the ID number and a face picture (see, patent reference 7).
[Patent reference 1]
   Japan Patent publication No 8-106562,A
[Patent reference 2]
   Japan Patent publication No 9-27018,A
[Patent reference 3]
   Japan Patent publication No 9-54851,A
[Patent reference 4]
   Japan Patent publication No 10-143621,A
[Patent reference 5]
   Japan Patent publication No 2002-32002,A
[Patent reference 6]
   Japan Patent publication No 2000-231613,A
[Patent reference 7]
   Japan Patent publication No 2003-1982,A

### [Description of the Invention]

### [Problem(s) to be Solved by the Invention]

Mitigating the risk of altered and forged for the user authentication information recording medium, such as ID card C and the passport, is performed by adopting an composition forming the hologram tape on the surface of the user authentication information recording medium, and recognizes this hologram tape with providing the reading equipment of the hologram tape.

However, thereby the risk of altered and forged for the user authentication information recording medium are not completely wiped away. For example, if a set of receptionist terminal 30 which composes the encoder / decoder in FIG. 15 and card reading equipment 40 come to hand; while altering the user authentication information recording medium by using it, the memory data belonging to the user can also be altered.

On the other hand, in case of ID card C on which information is recorded magnetically, the information can be read easily and there is a problem that the alteration is also easy.

Moreover, there is also a problem that the information can be read comparatively easily by the case of ID card C whose information is electrically memorized to IC chip etc.

In view of such situations, the present invention provides the authentication information recording medium which solves the above problems since adopting a comprising of: providing the hologram tape, which any other hologram tape having the same hologram information cannot exist, to the user authentication information recording medium as the unique code information on the medium; providing the user authentication information; memorizing in IC both the user authentication information and the personal information belonging to the user after encrypted by encryption encoding algorithm. Moreover, it prevents from reading information easily and enables it to make the alteration difficult.

### [Means for Solving the Problem]

First, the invention of the authentication information recording medium according to claim 1, wherein the hologram tape that is transferred the small convexes / concaves hologram original picture comprising that: the long flat image which describes the random number in a rectilinear state in a form of a bar code is created; a hologram original picture of random numbers of the form of the bar code is created based on the created flat image; the hologram original picture is coiled around a surface of a drum; a drum-shaped hologram master which forms a small convexes / concaves corresponding to interference fringes on the surface of the drum with the application of etching technology is created; the small convexes / concaves hologram original picture of the surface of the drum-shaped hologram master is transferred on a material sheet repeatedly by rotating the drum-shaped hologram master on the surface of the long material sheet; cutting out the material sheet to specific length; while surface of the user authentication information recording-medium is provided this hologram tape as unique code information on the medium, and it is provided user authentication information; both of the user authentication information and the personal information belonging to the user are memorized in IC after encrypted by encryption encoding algorithm.
Also, the invention of the user authentication information recording medium according to claim 2 is wherein the authentication information provided to the surface is photograph of user face image.
Also, the invention of a user authentication information recording medium according to claim 3 is wherein the encryption encoding algorithm comprised of data compression algorithm.
Also, the invention of the user authentication security card according to claim 4 is, wherein providing; a record domain where the hologram stored first data is recorded, a memory method where memorizes third data which the second data is encoded based on the first data stored in the hologram recorded on the record domain.
Also, the invention of the user authentication security card according to claim 5 is, whereby adding a galaxy code to the hologram recorded on the record domain.
Also, the invention of the user authentication security card according to claim 6 is wherein the record domain is a hologram record part.
Also, the invention of the user authentication security card according to claim 7 is wherein the memory method is an IC chip.
Also, the invention of the user authentication security card according to claim 8 is wherein the first data is an algorithm data.
Also, the invention of the user authentication security card according to claim 9 is wherein the second data is an image data.
Also, the invention of method of recording / reproducing the user authentication security card according to claim 10 is comprising the steps of:
reading the first data stored in the hologram recorded on the record domain of the user authentication security card, as a first reading step;
reading the third data in which the second data is encoded based on the first data, as a second reading step;
decoding the third data which is read in the step two based on the first data read in the step one to the second data, as a decoding step; and
outputting the second data, as output step.
Also, the invention of method of recording / reproducing the user authentication security card according to claim 11 is, wherein in the first reading step: irradiating light to the record domain of the user authentication security card from first predetermined direction; receiving reflection light of the light in second predetermined direction; and reading the first data based on the received reflection light.
Also, the invention of method of recording / reproducing the user authentication security card according to claim 12 is, wherein: the second data is image data corresponding to a predetermined picture; it provides with a picturizing step which picturizes the picture, a memorizing step which memorizes the image data corresponding to the picture, an encoding step which encodes the image data memorized in the memory step based on the first data, record step which records the image data encoded in the coding step on the user authentication security card.

### [Effect of the Invention]

Since, as the present invention, alteration and forgery can not be performed by adopting the composition of: providing the hologram tape, which any other hologram tape having the same hologram information cannot exist, to the user authentication information recording medium as the unique code information on the medium; providing the user authentication information; memorizing in IC both the user authentication information and the personal information belonging to the user after encrypted by encryption encoding algorithm. Then, since both of the user authentication information and the personal information belonging to user after encrypted by encryption encoding algorithm are memorized in IC, if user authentication information provided to the authentication information recording medium is altered or forged, user authentication is not performed even because of referring to true user authentication information memorized in IC.

Moreover, it is considered that somebody receives the set of the receptionist terminal and the card reading equipment with altering and forging both of the user authentication information and the personal information belonging to the user memorized in the user authentication information recording medium by using this; however, there is no utility value in the user authentication information recording medium in fact.

On the other hand, each of the technologies are indicated by the official report as themselves, which are: the hologram tape which are used in this invention; providing the hologram tape to the user authentication information recording medium; providing the user authentication information as like the photograph image to the user authentication information recording medium; and memorizing in IC both of the user authentication information and the personal information belonging to user after encrypted by encryption encoding algorithm. However, the alteration and forgery of the user authentication information recording medium can not be possible by having the combination of: providing the user authentication information recording medium to the hologram tape which can not exist other than the only one hologram tape providing the same hologram information; providing the user authentication information to the user authentication information recording medium; memorizing in IC both the user authentication information and the personal information belonging to the user after encrypted by encryption encoding algorithm.

Moreover, the judgment by man can be made unnecessary by adding the galaxy code to the hologram recorded on the record domain, and 99% or more of high rate of a reading success can be realized.

### [Description of the Preferred Embodiments]

### < The first embodiment >

The best mode of carrying out the invention is explained based on FIG. 1. FIG. 1 is equivalent to a view, which FIG. 14 and FIG. 15 is simplified conceptually and is shown.

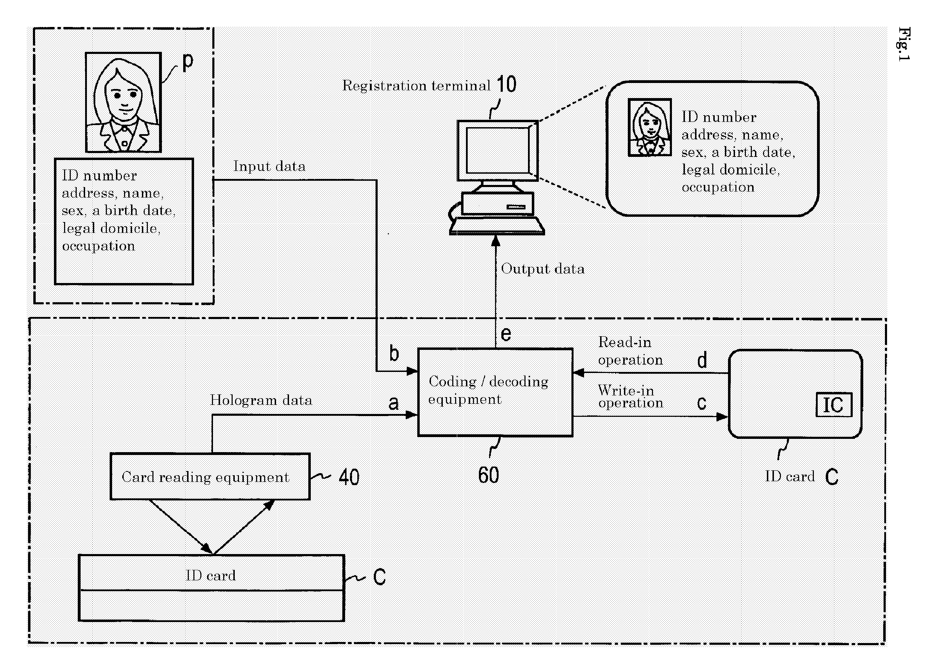

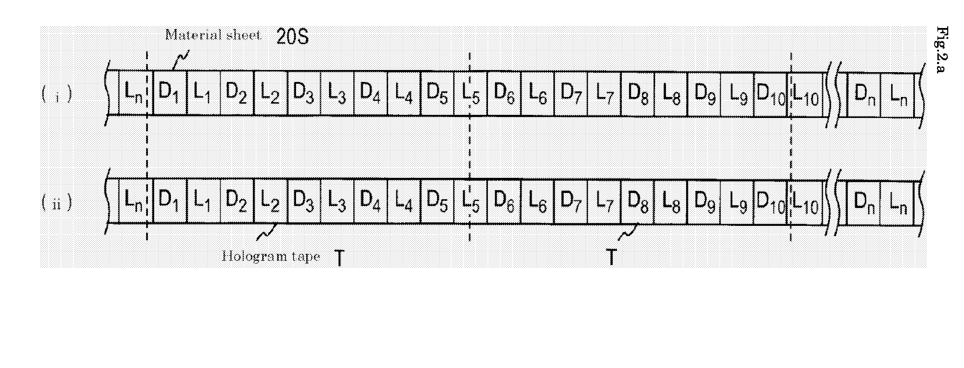

In FIG. 1, 60 shows coding / decoding equipment. Registration terminal 10 and card reading equipment 40 are connected to coding / decoding equipment 60.

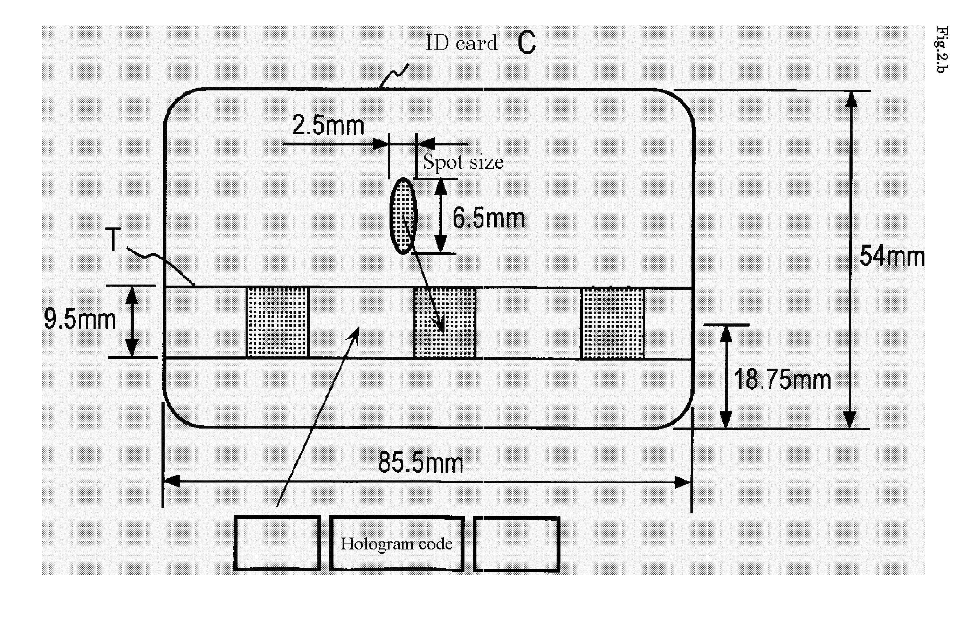

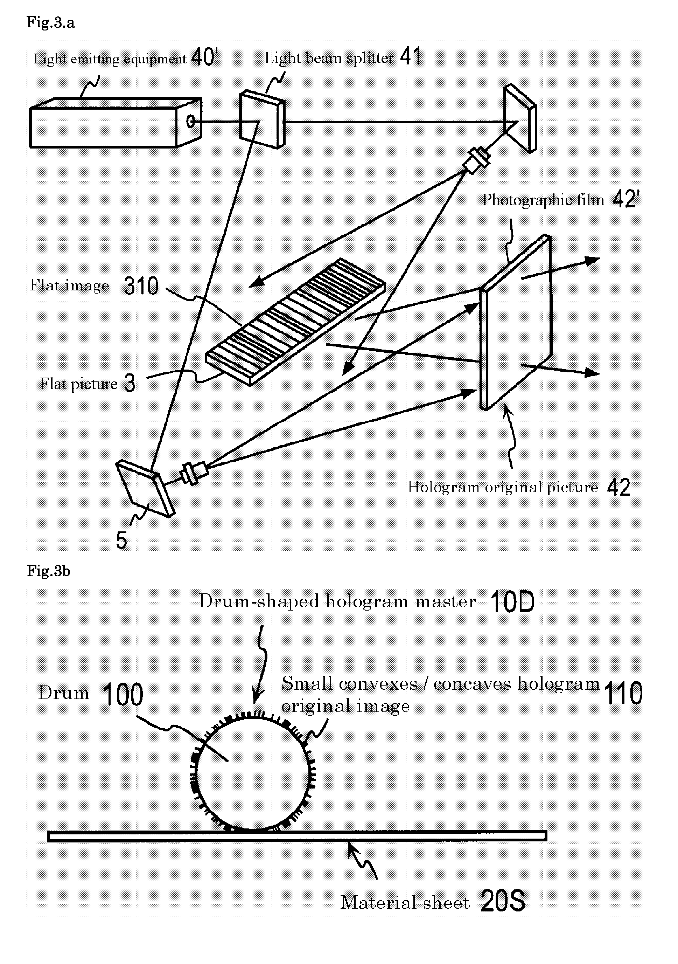

Here, as shown in FIG. 2, hologram tape T is affixed on the surface of ID card C. As hologram tape T, hologram tape T especially composed through the following manufacturing process is used. It is explained based on FIG. 3: at first, long flat image 310 which describes the random numbers in the rectilinear state in the form of the bar code is created; hologram original image 42 of the random numbers of the form of the bar code is created based on created flat image 310; hologram original image 42 is coiled around surface of drum 100; drum-shaped hologram master 10D which forms the small convexes / concaves corresponding to interference fringes on surface of drum 100 with the application of etching technology is created; small convexes / concaves hologram original image 110 of surface of drum-shaped hologram master 10D is transferred on material sheet 20S repeatedly by rotating drum-shaped hologram master 10D on surface of long material sheet 20S; material sheet 20S, which small convexes/concaves hologram original image is transferred, is cutting out required length corresponding to the length of ID card C; and hologram tape T is manufactured.

Manufactured hologram tape T is explained based on FIG. 2. FIG. 2a shows: material sheet 20S which is manufactured by the above manufacturing process and is transferred small convexes/concaves hologram original image; and hologram tape T which is cut out and formed in the required length corresponding to the length of ID card C; and FIG. 2b is the view showing that the hologram tape T is affixed on the surface of ID card C.

Data from D₁ to Dₙ shows data formed to the hologram tape T at the time of manufacturing, respectively. Intervals from L₁ to Lₙ shows intervals between the data formed in the hologram tape T at the time of manufacturing, respectively. Data from D₁ to D₁₀ shows very small part of material sheet 20S in which small convexes / concaves hologram original image 110 which is formed is transferred. Interval from L₁ to L₁₀ also shows very small part of material sheet 20S in which formed small convexes / concaves hologram original image is transferred. The width of each data D and the length of each interval L which are formed are uniquely determined at time of design creation of drum-shaped hologram master 10D in which the small convexes / concaves corresponding to interference fringes is formed on the surface of drum 100. Here, data D, which is between interval from Lₙ to L₅ of the hologram tape T, and a whole interval L, in addition to data D, which is interval from L₅ to L₁₀, and the whole interval L, form the unique hologram information on the hologram tape, respectively.

Material sheet 20S of FIG. 2.a (i) is cut out at intervals of Lₙ, L₅, and L₁₀ by chance and two sheets of hologram tape T of the equal lengths, as shown in FIG. 2.a (ii), is formed. Then, the widths of data from D₁ to D₁₀ are not equal mutually, and the length of the interval between data L₁ and L₁₀ mutually. As mentioned above, for hologram tape T, since the hologram information, which depends on each width and each length of interval L, which is a formed value of data D, is specified, both the hologram information shown in the hologram tape T as shown in FIG. 2.a (ii) are not equal. Here, for cut out and formed hologram tape T, which any other hologram tape having the same hologram information cannot exist.

FIG. 2.b shows ID card C that affixed this hologram tape T. To coding / decoding equipment 60, peculiar encryption encoding algorithm and encryption decoding algorithm is provided (encryption encoding algorithm: data compression algorithm; encryption decoding algorithm: data decompression algorithm). When issuing ID card C, ID card C that affixes hologram tape T shown in FIG. 2.a (ii) is prepared. A card unique code information equivalent to ID number is to be provided to ID card C by affixing hologram tape T. While inputting user face photographic image p which is user authentication information via scanner 13 or with digital camera 12 into coding / decoding equipment 60, the personal information, such as the address, the name, sex, the birth date, the legal domicile and the occupation, are inputted into coding / decoding equipment 60, and compressive encryption of both of these are carried out by the peculiar encryption encoding algorithm. On the other hand, ID card C which affixes hologram tape T is applied to card reading equipment 40, and the card unique code information which hologram tape T shows is read.

User face photographic image p and personal information which are inputted into coding / decoding equipment 60 and carried out compressive encryption by peculiar encryption encoding algorithm are compressed and memorized in IC of ID card C affixed hologram tape T with the card unique code information on condition that the card unique code information shown in hologram tape T is read.

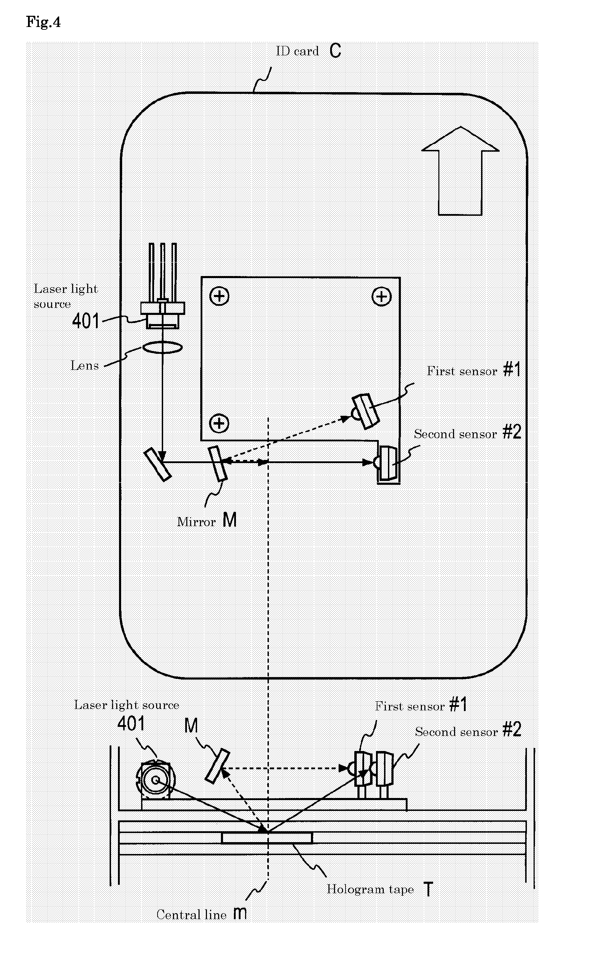

Operation of card reading equipment 40 is explained based on FIG. 4.

Card reading equipment 40 irradiates laser light on providing hologram tape T from laser light source 401 along with the central line of a length direction. The hologram of this hologram tape T has three-dimensional structure. When the laser light emitted from laser light source 401 scans along with the central line m of length direction of the hologram tape T provided on ID card C; and the laser light carries out mirror reflection there and an incidence is carried out to second sensor #2, this means that the laser light is irradiating the interval L between the data with which hologram data D does not exist. It detects interval L between data D by measuring a time interval, which laser light is carrying out incidence to second sensor #2. When the laser light of laser light source 401 irradiates data D with which hologram data exists, the laser light is made to reflect by the predetermined angle of reflection with the hologram data of three-dimensional structure; incidence of the laser light is carried out to first sensor #1; and data D is detected. In addition, if it is performed to cut out material sheet 20S at data D existing hologram data, this odd data D is added to the respective adjoining interval L and is treated with as a part of interval.

Here, handling operation of ID card C is summarized based on FIG. 1. ID card C is to be a non-contacted formula.

For a write-in operation of data to ID card C, write-in operation "c" which write-in data to ID card C is performed by: reading operation "a" which reads the card unique code information, which hologram tape T shows, with applying ID card C affixed hologram tape T to card reading equipment 40; and input operation "b" which inputs various input data to coding / decoding equipment 60.

For a read-out operation of ID card C, display operation "e" which displays output data for various data on registration terminal 10 is performed by: reading operation a which reads the card unique code information, which hologram tape T shows, to card reading equipment 40 with the application of ID card C; and read-in operation "d" which reads ID card C to coding / decoding equipment 60 by no contacting. Here, input data of b and output data of e become almost equal.

### < The second embodiment >

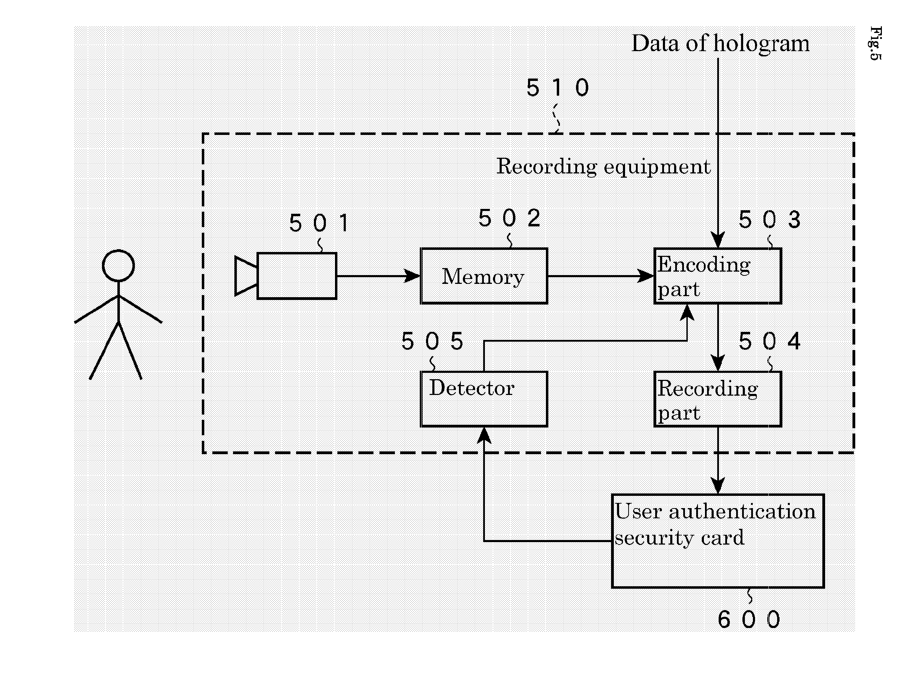

Then, another embodiment is explained. FIG. 5 is a block diagram shown as an example of composition for one embodiment of recording equipment applying the present invention. As shown in the figure, the embodiment is what: reads the algorithm data (the first data) stored in the hologram on user authentication security card 600, codes designated data following the algorithm data, and records on user authentication security card 600.

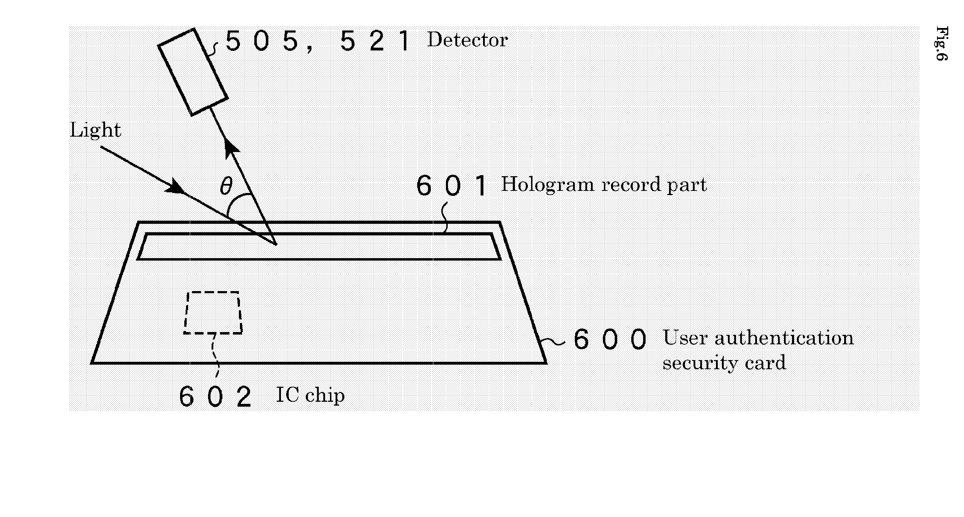

As shown in FIG. 5, recording equipment 510 is comprised of: image pick-up equipment 501 which picturizes a designated picture, converts it into digital image data (the second data) and outputs it; memory 502 which memorizes the image data corresponding to the picture which is picturized by image pick-up equipment 501; encoding part 503 which encodes the image data memorized in memory 502 based on the algorithm data stored in the hologram of hologram record part 601 (FIG. 6) of user authentication security card 600; recording part 504 which records the image data encoded by the encoding part 503 on IC chip 602 (FIG. 6) of user authentication security card 600; and detector 505 which reads the algorithm data stored in the hologram of the hologram record part 601 of user authentication security card 600.

FIG. 6 shows an example of composition of user authentication security card 600. The above-mentioned algorithm data is stored in the hologram of hologram record part 601. The algorithm data stored in the hologram of hologram record part 601 can be read by: irradiating the predetermined light at the hologram of hologram record part 601 from a first predetermined direction; receiving reflected light with the detector 505 in a second predetermined direction; and converting into an electric signal corresponding to an intensity of the received light.

Moreover, an angle θ between an optical axis of a luminescence part (not shown in the figure) which irradiates the light to hologram record part 601 and an optical axis of detector 505 which receives the reflected light of the light is to be a predetermined angle. Moreover, user authentication security card 600 is equipped with IC chip 602, and it can record electrically the above-mentioned encoded image data and various data.

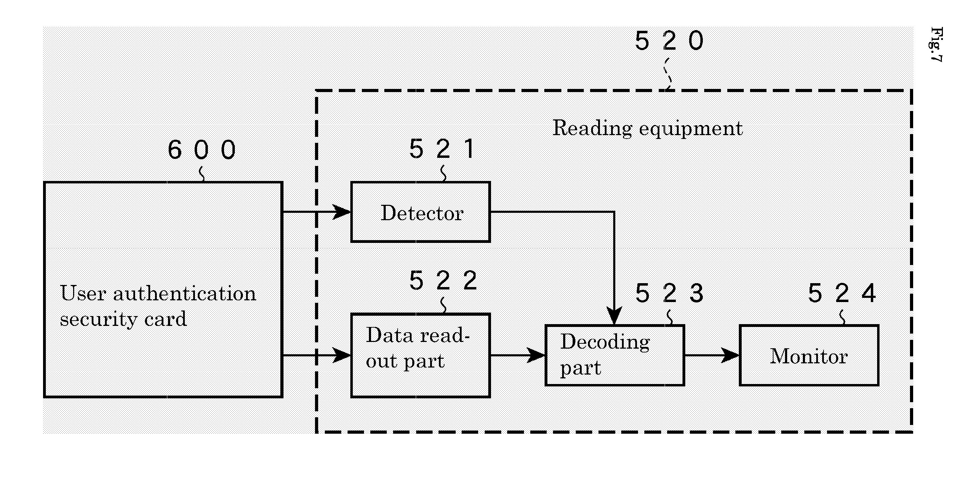

FIG. 7 shows a block diagram of an example for composition of an embodiment for reading equipment applying the present invention. As shown in the figure, reading equipment 520 is comprised of: luminescence part (not shown in the figure) which irradiates the predetermined light to hologram record part 601 of user authentication security card 600; detector 521 which reads the algorithm data stored in the hologram by receiving the reflected light and converting with outputting the electric signal corresponding to the intensity of the received light to digital data; data read-out part 522 which reads the data electrically recorded on IC chip 602 of user authentication security card 600; decoding part 523 which performs decoding processing based on the algorithm data read by detector 521; and monitor 524 which displays the data decoded by decoding part 523.

The unique algorithm data is previously stored in the hologram of the hologram record part 601 for every user authentication security card 600; the algorithm data, which is stored in the hologram, can be read only by irradiating light from the first predetermined direction, and receiving the reflected light in the second predetermined direction which makes a predetermined angle with the above first direction.

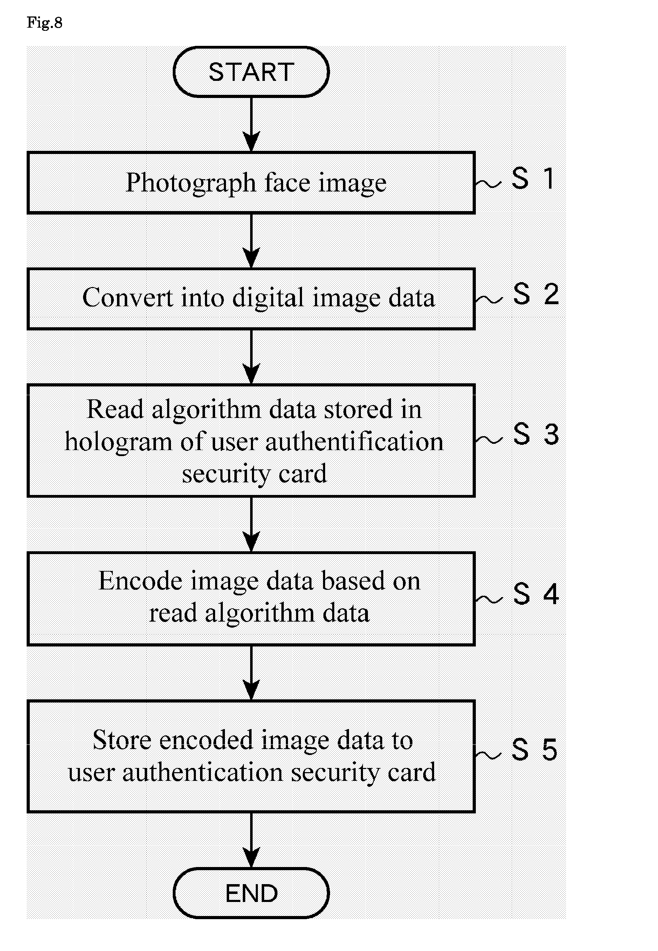

Then, it is explained that the procedure which records the image data for face of the owner of user authentication security card 600 to IC chip 602 of user authentication security card 600 based on the flow chart as shown in FIG. 8.

At first, in step S1, the picture of the face of the owner of user authentication security card 600 is picturized by image pick-up equipment 501. Then, in step S2, the electric signal corresponding to the picture of the face is converted into digital image data and is provided to memory 502. This image data is memorized by memory 502 and is suitably provided to encoding part 503.

Then, in step S3, the algorithm data stored in the hologram of hologram record part 601 of user authentication security card 600 is read by detector 505. The read algorithm data is provided to encoding part 503.

Then, in step S4, the above-mentioned image data memorized in memory 502 is encoded based on the algorithm data read from user authentication security card 600 and is provided to recording part 504.

Then, in step S5, the encoded image data, which is provided from encoding part 503 by recording part 504, is recorded on the IC chip 602 of user authentication security card 600.

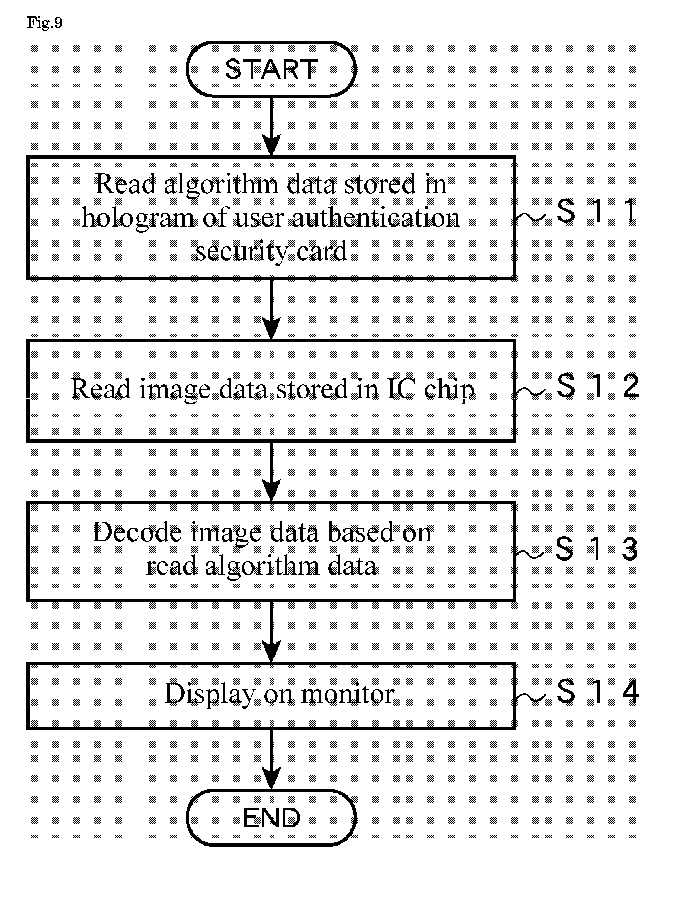

Then, based on the flow chart as shown in FIG. 9, it is explained that the procedure of reproducing the image data of user face recorded on IC chip 602 of user authentication security card 600 and displaying it on monitor 524.

At first, in step S11, the algorithm data stored in the hologram of hologram record part 601 of user authentication security card 600 is read by detector 521 and is provided to decoding part 523. Then, in step S12, the image data recorded on IC chip 602 of user authentication security card 600 is read by data read-out part 522 and is provided to decoding part 523.

Then, in step S13, the image data that is provided from the data read-out part 522 is decoded by decoding part 523 based on the algorithm data that is provided from detector 521.
Then, in step S14, the decoded image data is provided and displayed on monitor 524.

It can attest whether a person who possesses user authentication security card 600 is the original owner of user authentication security card 600 himself or not by comparing the image for the face of the owner of user authentication security card 600 displayed on monitor 524 with an image of an actual face by visual inspection. Since the algorithm data stored in the hologram is difficult to read, as mentioned above, displaying or altering the image data recorded on IC chip 602 is difficult; it can be restrained the forgery and the alteration of user authentication security card 600.

### < The third embodiment >

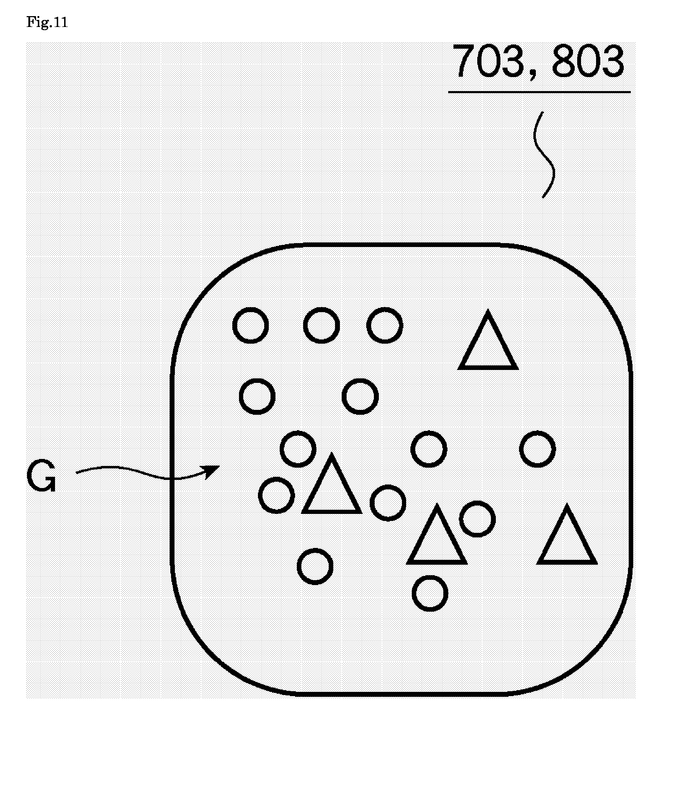

Then, furthermore another embodiment is explained. FIG. 10.a is a surface view of a credit card and FIG. 10.b is a back view of the credit card. FIG. 11 is a schematic illustration showing the galaxy code added to the hologram. As shown in FIG. 10 and 11, by adding galaxy code 706 to the hologram recorded on hologram record part 703 of credit card 700, the embodiment makes the judgment unnecessary by a person, and enables 99% or more of high rate of a reading success.

As shown in FIG. 10, credit card 700 is comprised of: substrate 701 which is plate-like board; photograph of user face 702 affixed on a surface of substrate 701; hologram record part 703 attached in the surface of substrate 701; RFID chip 704 which electrically memorize various kinds of information, such as an address, a name, sex, a birth date, and the like of user; and built-in antenna 705 which arranged in a shape of a loop in substrate 701. The hologram is recorded on hologram record part 703, and as shown in FIG. 11, galaxy code G is added to this hologram. Galaxy code G is arranged many galaxy items at random and becomes unique to every credit card 700.

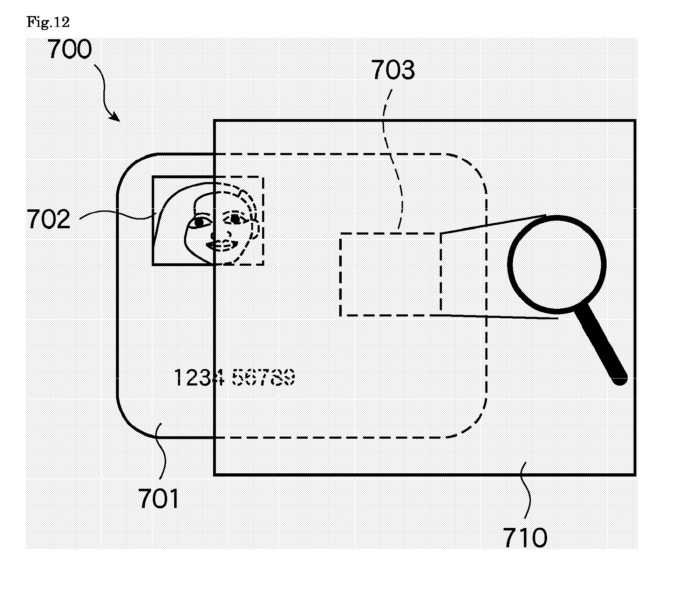

When reading credit card 700, as shown in FIG. 12, credit card 700 is inserted to reader 710. Then, reader 710 judges whether this credit card 700 is regular by detecting correctly a minute pattern of the galaxy item of galaxy code G. Under the present circumstances, since there is about 25000 kinds of combination for every galaxy item, supposing there are n galaxy items, it becomes that almost 25000ⁿ of galaxy patterns exist. Therefore, the probability of coinciding galaxy code G of two credit cards 700 completely becomes a 25000⁻ⁿ grade; if the number n of the galaxy item is large to some extent, it can be regarded substantially zero. Consequently, unjust duplicate of credit card 700 can be perceived. Moreover, by using the method of this galaxy code G, not only becomes the judgment by a person unnecessary but it actualizes 99% or more of high rate of a reading success.

Then, if credit card 700 is recognized as regular, a permission which accesses the information memorized in the RFID chip 704 is to be obtained. Therefore, radio transmission of various kinds of information memorized in RFID chip 704 is carried out from built-in antenna 705 to reader 710 side by non-contacting type automatic recognition technology, namely, RFID (radio frequency identification).

### <Other embodiments>

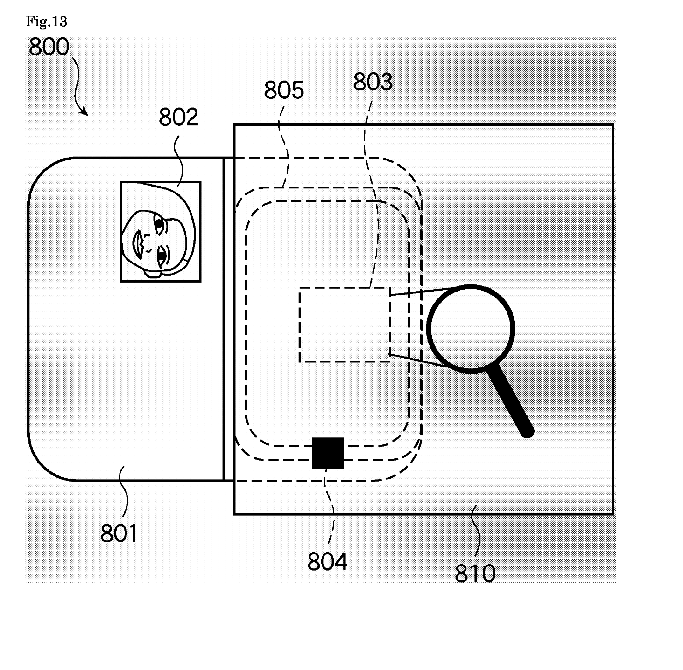

In addition, in the third embodiment as mentioned above, although it is explained that the case applying the present invention to credit card 700, the present invention is also applicable to passport 800 as shown in FIG. 13.

As shown in FIG. 13, the passport 800 is comprised of: substrate paper 801 that is booklet-like; photograph of user face 802 which is affixed in inside of substrate paper 801; hologram record part 803 which is attached in the inside of substrate paper 801; RFID chip 804 which electrically memorizes various kinds of information, such as the address, the name, the sex, and the birth date, and the like of user; built-in antenna 805 which is inserted in substrate paper 801 in the shape of the loop. The hologram is recorded on the hologram record part 803, and as shown in FIG. 11, galaxy code G is added to this hologram. Galaxy code G is arranged many galaxy items at random and becomes unique to every passport 800.

When it reads this passport 800, passport 800 is inserted in reader 810 as shown in FIG. 13. Then, reader 810 judges whether this passport 800 is regular by detecting correctly the minute pattern of the galaxy item of galaxy code G. The unjust duplicate of passport 800 can be perceived by the same reason described in the third embodiment. Moreover, by using the method of this galaxy code G, the judgment by a person becomes unnecessary, and it actualizes 99% or more of high rate of the reading success.

Then, if passport 800 is recognized as regular, the permission which accesses the information memorized in the RFID chip 804 is to be obtained. Therefore, radio transmission of various kinds of information memorized in RFID chip 804 is carried out from built-in antenna 805 to reader 810 side by non-contacting type automatic recognition technology, namely, RFID (radio frequency identification).

### [BRIEF DESCRIPTION OF THE DRAWINGS]

[FIG. 1] FIG. 1 is a view explaining an embodiment of the present invention.
[FIG. 2.a] FIG. 2.a is a view explaining a hologram tape.
[FIG. 2.b] FIG. 2.b is a view explaining an ID card.
[FIG. 3.a] FIG. 3.a is a perspective diagram explaining a manufacturing process of the hologram tape.
[FIG. 3.b] FIG. 3.b is a front elevational view explaining the manufacturing process of the hologram tape.
[FIG. 4] FIG. 4 is a view explaining a card reading equipment.
[FIG. 5] FIG. 5 is a block diagram showing an example of composition of a recording equipment that records data on a user authentication security card in the present invention.
[FIG. 6] FIG. 6 is a view showing a method that reads an algorithm data stored in the hologram.
[FIG. 7] FIG. 7 is a block diagram showing an example of composition of the reading equipment that reads the data recorded on the user authentication security card in the present invention.
[FIG. 8] FIG. 8 is a flow chart showing a procedure that records the data to the user authentication security card.
[FIG. 9] FIG. 9 is a flow chart showing a procedure that reads and displays the data recorded on the user authentication security card.
[FIG. 10.a] FIG. 10.a is a surface view of a credit card.
[FIG. 10.b] FIG. 10.b is a back view of the credit card.
[FIG. 11] FIG. 11 is an enlarged detail of a hologram record part.
[FIG. 12] FIG. 12 is a view showing a state where the credit card is inserted in a reader.
[FIG. 13] FIG. 13 is a view showing a state where the passport is inserted in a reader.
[FIG. 14] FIG. 14 is a view explaining a conventional example.
[FIG. 15] FIG. 15 is a view explaining another conventional example.

### [Description of Notations]

- 10: Registration terminal
- 10D: Drum-shaped hologram master
- 11: Keyboard
- 12: Digital camera
- 13: Scanner
- 20: Issue terminal
- 20S: Material sheet
- 21: Card issue machine
- 30: Receptionist terminal
- 40: Card reading equipment
- 42: Hologram original picture
- 50: Laser printer
- 60: Coding / decoding equipment
- 90: Server
- 91: Cable
- 92: Router
- 100: Drum
- 110 --: Small convexes / concaves hologram original image
- 310: Flat image
- 401: Laser light source
- a --: Reading operation
- b: Input operation
- c: Write-in operation
- d: Read-in operation
- e: Display operation
- C: ID card (user authentication information recording medium)
- D₁ - Dₙ: Data
- L₁ - Lₙ: Interval
- m: Central line
- p --: User face photographic image (user authentication information)
- Pe: User
- T: Hologram tape
- #1: First sensor
- #2: Second sensor
- 501: Image pick-up equipment
- 502: Memory
- 503: Encoding part
- 504: Recording part
- 505, 521: Detector
- 510 --: Recording equipment
- 520: Reading equipment
- 522: Data read-out part
- 523: Decoding part
- 524: Monitor
- 600: -- User authentication security card
- 601: Hologram record part (record domain)
- 602: IC chip (memory method)
- 700: Credit card (user authentication security card)
- 701: Substrate
- 702, 802 --: Photograph of user face
- 703, 803: Hologram record part
- 704, 804: RFID chip
- 705, 805: Built-in antenna
- 800: Passport (user authentication security card)
- 801: Substrate paper
- G: Galaxy code

## Claims

1. A user authentication information recording medium comprising:
a hologram tape which is transferred a small convexes / concaves hologram original picture comprising;
creating a long flat image that describes a random number in a rectilinear state in a form of a bar code,
creating a hologram original picture of the random numbers of the form of the bar code based on the created flat image,
coiling the hologram original picture around a surface of a drum,
creating a drum-shaped hologram master which forms a small convexes / concaves corresponding to interference fringes on the surface of the drum with an application of etching technology,
transferring the small convexes / concaves hologram original picture of the surface of the drum-shaped hologram master on a material sheet repeatedly by rotating the drum-shaped hologram master on the surface of the long material sheet, and
cutting out the material sheet to specific length, which is provided on the surface as unique code information;
user authentication information provided with surface(s); and
an IC which encrypts and memorizes both of user authentication information and personal information belonging to a user by encryption encoding algorithm.

2. The user authentication information recording medium of claim 1, wherein the user authentication information provided to the surface is photograph of user face image.

3. The user authentication information recording medium of any one of the claims 1 and 2, wherein the encryption encoding algorithm comprises of data compression algorithm.

4. A user authentication security card, wherein providing;
a record domain where the hologram stored first data is recorded, and
a memory method where memorizes third data which second data is encoded based on the first data stored in the hologram recorded on the record domain.

5. The user authentication security card of claim 4, wherein galaxy code(s) is added to the hologram recorded on the record domain.

6. The user authentication security card of any one of the claims 4 and 5, wherein the record domain is a hologram record part.

7. The user authentication security card of any one of the claims 4 to 6, wherein the memory method is IC chip(s).

8. The user authentication security card of any one of the claims 4 to 7, wherein the first data is algorithm data.

9. The user authentication security card of any one of the claims 4 to 8, wherein the second data is image data.

10. A method of recording / reproducing the user authentication security card comprising the steps of:
reading the first data stored in the hologram recorded on the record domain of the user authentication security card, as first reading step;
reading the third data which the second data is encoded based on the first data stored in the user authentication security card, as second reading step;
decoding the third data, which is read in the second reading step, based on the first data, which is read in the first reading step, to the second data, as decoding step; and
outputting the second data, as output step.

11. The method of recording / reproducing the user authentication security card of claim 10, wherein for the first reading step;
irradiating light to the record domain of the user authentication security card from first predetermined direction,
receiving reflection light of the light in second predetermined direction, and
reading the first data based on the received reflection light.

12. The method of recording / reproducing the user authentication security card of any one of the claims 10 and 11, wherein the second data is image data corresponding to a predetermined picture and comprising the steps of;
picturizing the picture as a picturizing step,
memorizing the image data corresponding to the picture as a memorizing step,
encoding the image data memorized in the memorizing step based on the first data as an encoding step, and
recording the image data encoded in the encoding step on the user authentication security card as a recording step.
